# EUROPEAN PATENT APPLICATION

(11) **EP 3 398 701 A2**
(43) Date of publication of application: **07.11.2018**
(21) Application number: 18166496.2
(22) Date of filing: 10.04.2018
(51) Int. Cl.: B22F 3/00, G01N 21/88, B33Y 50/02, B29C 64/393

(54) **REAL TIME DETECTION OF DEFECTS DURING FORMATION OF AN ADDITIVELY MANUFACTURED COMPONENT**

(30) Priority: 14.04.2017 US 201715487472
(71) Applicant: General Electric Company, Schenectady, NY 12345 (US)
(72) Inventor: DIWINSKY, David Scott, Cincinnati, OH 45215 (US); ROBERTS, Herbert Chidsey, Cincinnati, OH 45215 (US)
(74) Representative: Fischer, Jens Peter

(57) **Abstract**

A method for additively manufacturing a component is provided. The method may include forming a surface on the top layer of the component, scanning the surface of the top layer of the component to determine if a defect is present in the surface, and if detected, correcting the defect within the surface. Scanning the surface of the top layer of the component to determine if a defect is present in the surface may be performed by obtaining data indicative of the surface of the top layer of the component by interrogating the surface of the top layer of the component with a scanning device, and comparing the data with a reference database to determine if an irregularity is present.

## Description

### FIELD

The present subject matter relates generally to additively manufactured components, and more particularly, to systems and methods for forming additively manufactured components while preventing the formation of defects within its construction.

### BACKGROUND

Additive manufacturing (AM) technologies are maturing at a fast pace. For example, very accurate additive manufacturing printers using a variety of materials, such as metals and polymers, are becoming available at decreasing costs. In addition, improved scanning technologies and modeling tools are now available. As a result, certain OEMs are beginning to use such technologies to produce original and replacement parts, which leads to the use of AM components within OEM equipment, such as a gas turbine engine.

However, when utilized in such equipment, particularly within aerospace turbomachinery, the quality of the AM component must be ensured. During the AM process, the powder bed may often create a "dust cloud" within the machinery impairing the visibility of the component being formed therein. As such, visual inspection of the component may not be possible. Additionally, high rates of material deposition may limit the time available for quality inspections, leading to a need for automated real-time inspection technologies that offers the opportunity for an AM systems self-inspect the current level of activity. When a flaw is identified, the system has the opportunity to activate a quality improvement sub-routine that will return printer to one or more low quality locations and execute the necessary corrective action to improve the AM part quality, before continuing to execute the reaming AM fabrication actions.

Accordingly, a need exists for the inspection and identification of defects within additively manufactured components.

### BRIEF DESCRIPTION

Aspects and advantages of the invention will be set forth in part in the following description, or may be obvious from the description, or may be learned through practice of the invention.

A method is generally provided for additively manufacturing a component. In one embodiment, the method includes forming a surface on the top layer of the component, scanning the surface of the top layer of the component to determine if a defect is present in the surface, and if detected, correcting the defect within the surface. For example, scanning the surface of the top layer of the component to determine if a defect is present in the surface may be performed by obtaining data indicative of the surface of the top layer of the component by interrogating the surface of the top layer of the component with a scanning device, and comparing the data with a reference database to determine if an irregularity is present.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 shows a perspective view of an exemplary additively manufactured component having a defect in its surface;
FIG. 2 shows a perspective view of the additively manufactured component of FIG. 1 after correcting the defect therein;
FIG. 3 shows a perspective view of another exemplary additively manufactured component having a defect in its surface;
FIG. 4 depicts certain components of a detection system according to example embodiments of the present subject matter; and
FIG. 5 is a method for additively manufacturing a component according to an exemplary embodiment of the present subject matter.

Repeat use of reference characters in the present specification and drawings is intended to represent the same or analogous features or elements of the present invention.

### DETAILED DESCRIPTION

Reference will now be made in detail to present embodiments of the invention, one or more examples of which are illustrated in the accompanying drawings. The detailed description uses numerical and letter designations to refer to features in the drawings. Like or similar designations in the drawings and description have been used to refer to like or similar parts of the invention.

Methods are generally provided for additively manufacturing a component while monitoring for defects that may be formed on each layer during the deposition process. As such, the methods may find any such defects during the manufacturing process, allowing for the defect to be corrected or the partially formed component to be discarded before completion. Thus, the methods can ensure that the resulting component can be formed without defect, while ensuring that the waste of powder material used in the process be minimized. For example, the methods may include detecting localized surface variations and/or density variations on each layer formed during the additively manufacturing process. This method may detect a defect that is invisible to the naked eye on the layer and/or on the final product (i.e., within the inner portion of the component) that would otherwise only be detectable through interrogation by a scanning device, such as an x-ray computed tomography device.

In general, the components described herein may be manufactured or formed using any suitable process. However, in accordance with several aspects of the present subject matter, these components may be formed using an additive-manufacturing process, such as a 3-D printing process. The use of such a process may allow the components to be formed integrally, as a single monolithic component, or as any suitable number of sub-components. In particular, the manufacturing process may allow these components to be integrally formed and include a variety of features not possible when using prior manufacturing methods. For example, the additive manufacturing methods described herein enable the manufacture of components while monitoring for various defects (e.g., in the form of thicknesses, materials, densities, surface variations, etc.) during the manufacturing process.

As used herein, the terms "additively manufactured" or "additive manufacturing techniques or processes" refer generally to manufacturing processes wherein successive layers of material(s) are provided on each other to "build-up," layer-by-layer, a three-dimensional component. The successive layers generally fuse together to form a monolithic component which may have a variety of integral sub-components. Although additive manufacturing technology is described herein as enabling fabrication of complex objects by building objects point-by-point, layer-by-layer, typically in a vertical direction, other methods of fabrication are possible and within the scope of the present subject matter. For example, although the discussion herein refers to the addition of material to form successive layers, one skilled in the art will appreciate that the methods and structures disclosed herein may be practiced with any additive manufacturing technique or manufacturing technology. For example, embodiments of the present invention may use layer-additive processes, layer-subtractive processes, or hybrid processes.

Suitable additive manufacturing techniques in accordance with the present disclosure include, for example, Fused Deposition Modeling (FDM), Selective Laser Sintering (SLS), 3D printing such as by inkjets and laserjets, Sterolithography (SLA), Direct Selective Laser Sintering (DSLS), Electron Beam Sintering (EBS), Electron Beam Melting (EBM), Laser Engineered Net Shaping (LENS), Laser Net Shape Manufacturing (LNSM), Direct Metal Deposition (DMD), Digital Light Processing (DLP), Direct Selective Laser Melting (DSLM), Selective Laser Melting (SLM), Direct Metal Laser Melting (DMLM), and other known processes.

The additive manufacturing processes described herein may be used for forming components using any suitable material. For example, the material may be plastic, metal, concrete, ceramic, polymer, epoxy, photopolymer resin, or any other suitable material that may be in solid, liquid, powder, sheet material, wire, or any other suitable form. More specifically, according to exemplary embodiments of the present subject matter, the additively manufactured components described herein may be formed in part, in whole, or in some combination of materials including but not limited to pure metals, nickel alloys, chrome alloys, titanium, titanium alloys, magnesium, magnesium alloys, aluminum, aluminum alloys, and austenite alloys such as nickel-chromium-based superalloys (e.g., those available under the name Inconel® available from Special Metals Corporation).

In addition, one skilled in the art will appreciate that a variety of materials and methods for bonding those materials may be used and are contemplated as within the scope of the present disclosure. As used herein, references to "fusing" may refer to any suitable process for creating a bonded layer of any of the above materials. For example, if an object is made from polymer, fusing may refer to creating a thermoset bond between polymer materials. If the object is epoxy, the bond may be formed by a crosslinking process. If the material is ceramic, the bond may be formed by a sintering process. If the material is powdered metal, the bond may be formed by a melting process. One skilled in the art will appreciate that other methods of fusing materials to make a component by additive manufacturing are possible, and the presently disclosed subject matter may be practiced with those methods.

In addition, the additive manufacturing process disclosed herein allows a single component to be formed from multiple materials. Thus, the components described herein may be formed from any suitable mixtures of the above materials. For example, a component may include multiple layers, segments, or parts that are formed using different materials, processes, and/or on different additive manufacturing machines. In this manner, components may be constructed which have different materials and material properties for meeting the demands of any particular application. In addition, although the components described herein are constructed entirely by additive manufacturing processes, it should be appreciated that in alternate embodiments, all or a portion of these components may be formed via casting, machining, and/or any other suitable manufacturing process. Indeed, any suitable combination of materials and manufacturing methods may be used to form these components.

An exemplary additive manufacturing process will now be described. Additive manufacturing processes fabricate components using three-dimensional (3D) information, for example a three-dimensional computer model, of the component. Accordingly, a three-dimensional design model of the component may be defined prior to manufacturing. In this regard, a model or prototype of the component may be scanned to determine the three-dimensional information of the component. As another example, a model of the component may be constructed using a suitable computer aided design (CAD) program to define the three-dimensional design model of the component.

The design model may include 3D numeric coordinates of the entire configuration of the component including both external and internal surfaces of the component. For example, the design model may define the body, the base layer, the surface, any surface features such as irregularities, component identifiers, localized material variations, or datum features, as well as internal passageways, openings, support structures, etc. In one exemplary embodiment, the three-dimensional design model is converted into a plurality of slices or segments, e.g., along a central (e.g., vertical) axis of the component or any other suitable axis. Each slice may define a two-dimensional (2D) cross section of the component for a predetermined height of the slice. The plurality of successive 2D cross-sectional slices together form the 3D component. The component is then "built-up" slice-by-slice, or layer-by-layer, until finished.

In this manner, the components described herein may be fabricated using the additive process, or more specifically each layer is successively formed, e.g., by fusing or polymerizing a plastic using laser energy or heat or by sintering metal powder. For example, a particular type of additive manufacturing process may use an energy beam, for example, an electron beam or electromagnetic radiation such as a laser beam, to sinter or melt a powder material. Any suitable laser and laser parameters may be used, including considerations with respect to power, laser beam spot size, and scanning velocity. The build material may be formed by any suitable powder or material selected for enhanced strength, durability, and useful life, particularly at high temperatures.

Each successive layer may be, for example, between about 10 µm and 200 µm, although the thickness may be selected based on any number of parameters and may be any suitable size according to alternative embodiments. Therefore, utilizing the additive formation methods described above, the components described herein may have cross sections as thin as one thickness of an associated powder layer, e.g., 10 µm, utilized during the additive formation process.

In addition, utilizing an additive process, the surface finish and features of the components may vary as need depending on the application. For example, the surface finish may be adjusted (e.g., made smoother or rougher) by selecting appropriate laser scan parameters during the additive process. A rougher finish may be achieved by increasing laser scan speed or decreasing the size of the melt pool formed, and a smoother finish may be achieved by decreasing laser scan speed or increasing the size of the melt pool formed. The scanning pattern and/or laser power can also be changed to change the surface finish in a selected area.

Notably, in exemplary embodiments, several features of the components described herein were previously not possible due to manufacturing restraints. However, the present inventors have advantageously utilized current advances in additive manufacturing techniques to develop exemplary embodiments of such components generally in accordance with the present disclosure. While the present disclosure is not limited to the use of additive manufacturing to form these components generally, additive manufacturing does provide a variety of manufacturing advantages, including ease of manufacturing, reduced cost, greater accuracy, etc.

In this regard, utilizing additive manufacturing methods, even multi-part components may be formed as a single piece of continuous metal, and may thus include fewer sub-components and/or joints compared to prior designs. The integral formation of these multi-part components through additive manufacturing may advantageously improve the overall assembly process. For example, the integral formation reduces the number of separate parts that must be assembled, thus reducing associated time and overall assembly costs. Additionally, existing issues with, for example, leakage, joint quality between separate parts, and overall performance may advantageously be reduced.

Also, the additive manufacturing methods described above enable much more complex and intricate shapes and contours of the components described herein. For example, such components may include thin additively manufactured layers and novel surface features.

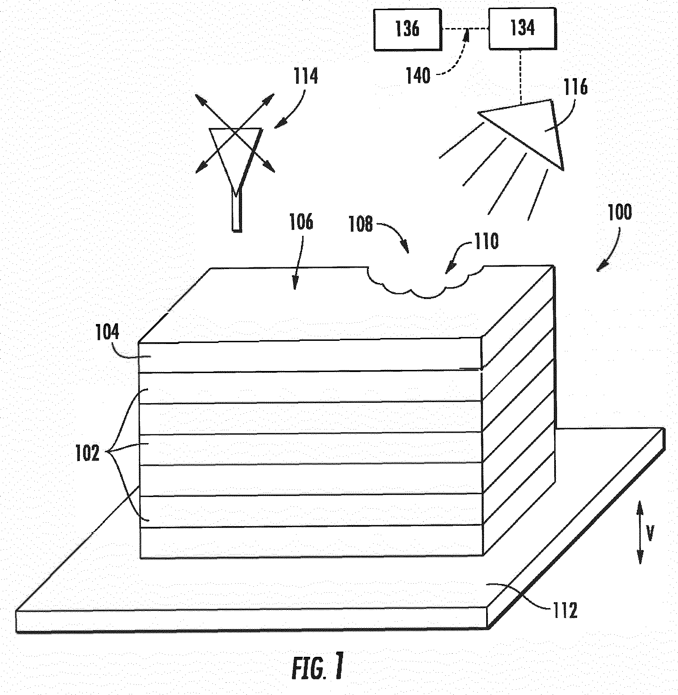

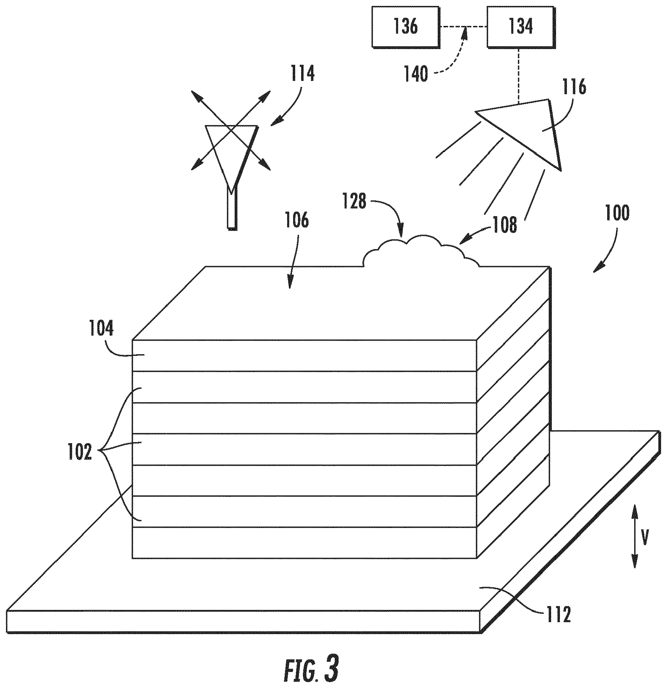

Referring now to FIG. 1 an additively manufactured component 100 is shown formed from a plurality of layers 102. More specifically, FIG. 1 provides a perspective view of component 100, which is shown as a simple component even though it should be appreciated that the additive manufacturing methods described herein may be used to form any suitable component for any suitable device, regardless of its material or complexity. The top layer 104, which represents the most recently fused layer of the component 100, defines a surface 106. A defect 108 is shown within the surface 106, which is represented by a void 110 defined within the layer 104 on the surface 106. Various other defects may be detected during the manufacture of the component 100. For example, in the alterative embodiment shown in FIG. 3, the defect 108 is a surface bulge 128 on the surface 106.

Also illustrated in FIG. 1 is an additive manufacturing platform 112 and an energy source 114, as may be used according to any of the additive manufacturing methods described herein. For example, component 100 may be constructed by laying a powder bed onto platform 112 and selectively fusing the powder bed at desired locations using energy source 114 to form a layer 102 of component 100. Platform 112 may be lowered along the vertical direction V after each layer is formed and the process may be repeated until component 100 is complete.

As shown in FIG. 1, the scanning device 116 is shown for detecting the presence of any defect 108 in the top layer 106 of the component 100. For example, the scanning device 116 may be a device for optical metrology, structured light, and/or flash infrared (IR) detection. That is, the inspection techniques may be adjusted to match the shape of the component 100 and/or the material within the layers 102, 104. For example, the scanning device 116 may direct electromagnetic radiation (e.g., light of a certain wavelength) onto the surface 106 of the top layer 104, and then detect the response from the surface 106 (i.e., the reflected electromagnetic radiation). In one embodiment, the scanning device 116 may pulse the electromagnetic radiation onto the surface 106 of the top layer 104, and then detect the response from the surface 106.

According to one embodiment, the scanning device 116 is generally configured for using principles of tomography for measuring and mapping the surface 106 of the top layer 106 of the component 100. This process of scanning, reading, mapping, or otherwise obtaining useful data regarding the shape and/or density variations within component 100.

According to the illustrated embodiment, scanning device 116 includes a controller 134 which is generally configured for receiving, analyzing, transmitting, or otherwise utilizing data acquired by scanning device 116. Controller 134 can include various computing device(s) (e.g., including processors, memory devices, etc.) for performing operations and functions, as described herein. For reasons described in more detail below, scanning device 116, or more specifically, controller 134, may further be in communication with a database or remote computing system 136, e.g., via a network 140, and may be configured for transmitting or receiving information related to component 100. The controller 134 and the computing system 136 may have may compare the data collected by the scanning device 116 to the CAD model of the printing process and/or to a known quality component layers for determining if a defect 108 is present on the layer 106.

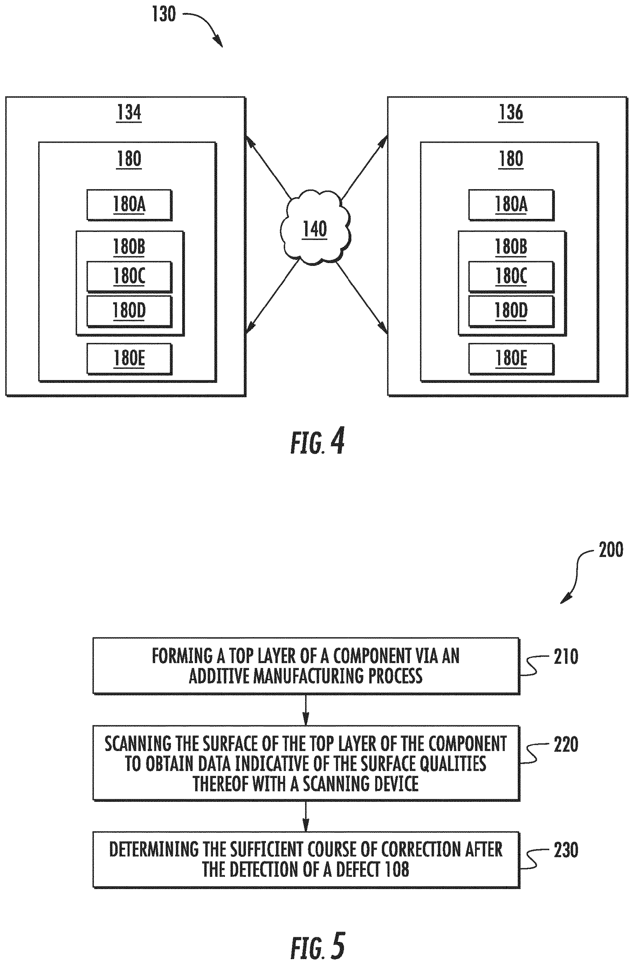

For example, controller 134 and remote computing system 136 form a detection system 130, which can include one or more computing device(s) 180, as shown in FIG. 5 depicting the detection system 130 according to example embodiments of the present disclosure. As described above, detection system 130 can include one or more controllers 134 and/or remote computing systems 136, which can be configured to communicate via one or more network(s) (e.g., network(s) 140). According to the illustrated embodiment, remote computing system 136 is remote from controller 134. However, it should be appreciated that according to alternative embodiments, remote computing system 136 can be included with or otherwise embodied by controller 134.

Although similar reference numerals will be used herein for describing the computing device(s) 180 associated with controller 134 and remote computing system 136, respectively, it should be appreciated that each of controller 134 and remote computing system 136 may have a dedicated computing device 180 not shared with the other. According to still another embodiment, only a single computing device 180 may be used to implement methods described herein, and that computing device 180 may be included as part of controller 134 or remote computing system 136.

Computing device(s) 180 can include one or more processor(s) 180A and one or more memory device(s) 180B. The one or more processor(s) 180A can include any suitable processing device, such as a microprocessor, microcontroller, integrated circuit, an application specific integrated circuit (ASIC), a digital signal processor (DSP), a field-programmable gate array (FPGA), logic device, one or more central processing units (CPUs), graphics processing units (GPUs) (e.g., dedicated to efficiently rendering images), processing units performing other specialized calculations, etc. The memory device(s) 180B can include one or more non-transitory computer-readable storage medium(s), such as RAM, ROM, EEPROM, EPROM, flash memory devices, magnetic disks, etc., and/or combinations thereof.

The memory device(s) 180B can include one or more computer-readable media and can store information accessible by the one or more processor(s) 180A, including instructions 180C that can be executed by the one or more processor(s) 180A. For instance, the memory device(s) 180B can store instructions 180C for running one or more software applications, displaying a user interface, receiving user input, processing user input, etc. In some implementations, the instructions 180C can be executed by the one or more processor(s) 180A to cause the one or more processor(s) 180A to perform operations, as described herein (e.g., one or more portions of methods described herein). More specifically, for example, the instructions 180C may be executed to perform a comparison between the scanned data and reference data, to perform a defect detection analysis, to transmit an indication of a defect, etc. The instructions 180C can be software written in any suitable programming language or can be implemented in hardware. Additionally, and/or alternatively, the instructions 180C can be executed in logically and/or virtually separate threads on processor(s) 180A.

The one or more memory device(s) 180B can also store data 180D that can be retrieved, manipulated, created, or stored by the one or more processor(s) 180A. The data 180D can include, for instance, data indicative of defects associated with the additively manufactured components. The data 180D can be stored in one or more database(s). The one or more database(s) can be connected to controller 134 and/or remote computing system 136 by a high bandwidth LAN or WAN, or can also be connected to controller through network(s) 140. The one or more database(s) can be split up so that they are located in multiple locales. In some implementations, the data 180D can be received from another device.

The computing device(s) 180 can also include a communication interface 180E used to communicate with one or more other component(s) of detection system 130 (e.g., controller 134 or remote computing system 136) over the network(s) 140. The communication interface 180E can include any suitable components for interfacing with one or more network(s), including for example, transmitters, receivers, ports, controllers, antennas, or other suitable components.

The network(s) 140 can be any type of communications network, such as a local area network (e.g., intranet), wide area network (e.g., internet), cellular network, or some combination thereof and can include any number of wired and/or wireless links. The network(s) 140 can also include a direct connection between one or more component(s) of detection system 130. In general, communication over the network(s) 140 can be carried via any type of wired and/or wireless connection, using a wide variety of communication protocols (e.g., TCP/IP, HTTP, SMTP, FTP), encodings or formats (e.g., HTML, XML), and/or protection schemes (e.g., VPN, secure HTTP, SSL).

It should be appreciated that component 100 is described herein only for the purpose of explaining aspects of the present subject matter. For example, component 100 will be used herein to describe exemplary methods of manufacturing additively manufactured components. It should be appreciated that the additive manufacturing techniques discussed herein may be used to manufacture other components for use in any suitable device, for any suitable purpose, and in any suitable industry. Thus, the exemplary components and methods described herein are used only to illustrate exemplary aspects of the present subject matter and are not intended to limit the scope of the present disclosure in any manner.

Now that the construction and configuration of component 100 according to an exemplary embodiment of the present subject matter has been presented, an exemplary method 200 for forming a component according to an exemplary embodiment of the present subject matter is provided, as shown in FIG. 5. Method 200 can be used by a manufacturer to form component 100, or any other suitable part or component. It should be appreciated that the exemplary method 200 is discussed herein only to describe exemplary aspects of the present subject matter, and is not intended to be limiting.

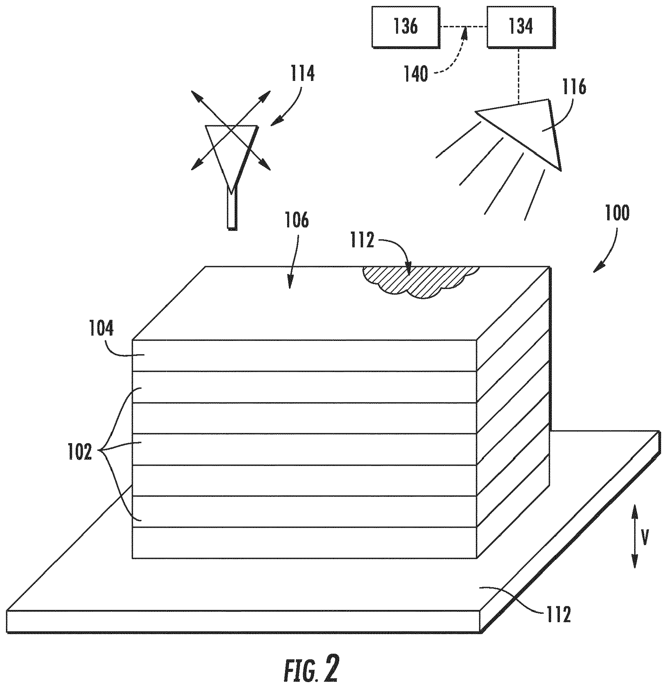

Referring to FIG. 5, method 200 includes, at step 210, forming a top layer of a component via an additive manufacturing process. Method 200 further includes, at step 220, scanning the surface of the top layer of the component to obtain data indicative of the surface qualities thereof with a scanning device. For example, step 220 may include interrogating the surface 106 of the top layer 104 of component 100 using scanning device 116 to generate a map of the surface 106 and comparing that map to the CAD model and/or a data of a known quality component that is defect free. Step 230 includes determining the sufficient course of correction after the detection of a defect 108. For example, when the defect 108 is a void 110 as in FIG. 1, then the defect 108 may be filled in and refused to form a complete surface 106 with a patch 112, as shown in FIG. 2. In alternative embodiments, such as in FIG. 3 where the defect 108 is a bulge 128, the bulge 128 may be refused to conform to the surface 106. However, it may be determined that the defect 108 is too large to salvage the component 100, and the component 100 may be discarded before the manufacturing process is complete.

The technology discussed herein makes reference to servers, databases, software applications, and other computer-based systems, as well as actions taken and information sent to and from such systems. It should be appreciated that the inherent flexibility of computer-based systems allows for a great variety of possible configurations, combinations, and divisions of tasks and functionality between and among components. For instance, computer processes discussed herein can be implemented using a single computing device or multiple computing devices (e.g., servers) working in combination. Databases and applications can be implemented on a single system or distributed across multiple systems. Distributed components can operate sequentially or in parallel. Furthermore, computing tasks discussed herein as being performed at the computing system (e.g., a server system) can instead be performed at a user computing device. Likewise, computing tasks discussed herein as being performed at the user computing device can instead be performed at the computing system.

This written description uses examples to disclose the invention and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A method for additively manufacturing a component (100), the method comprising:
forming a surface (106) on the top layer (104) of the component (100);
scanning the surface (106) of the top layer (104) of the component (100) to determine if a defect is present in the surface (106); and
if detected, correcting the defect within the surface (106).

2. The method of claim 1, wherein scanning the surface (106) of the top layer (104) of the component (100) to determine if a defect is present in the surface (106) comprises:
obtaining data indicative of the surface (106) of the top layer (104) of the component (100) by interrogating the surface (106) of the top layer (104) of the component (100) with a scanning device (116); and
comparing the data with a reference database to determine if an irregularity is present.

3. The method of claim 2, wherein obtaining data and comparing the data is performed by a controller (134) in communication with the scanning device (116).

4. The method of claim 1, wherein forming the surface (106) on the top layer (104) of the component (100) comprises:
depositing a layer of powder; and
directing energy from an energy source (114) to selectively fuse the layer of powder.

5. The method of claim 1, wherein the surface (106) is scanned with a scanning device (116) for optical metrology.

6. The method of claim 1, wherein the surface (106) is scanned with a scanning device (116) for structured light.

7. The method of claim 1, wherein the surface (106) is scanned with a scanning device (116) for flash infrared detection.

8. The method of claim 1, wherein, upon detecting a void (110) in the surface (106), correcting the defect within the surface (106) comprises filling in the void (110) with additional material and fusing the additional material within the void (110).

9. The method of claim 1, wherein upon detecting a bulge (128) in the surface (106), correcting the defect within the surface (106) comprises refusing the bulge (128) to conform the surface (106).

10. A method for additively manufacturing a component (100), the method comprising:
forming a surface (106) on the top layer (104) of the component (100);
scanning the surface (106) of the top layer (104) of the component (100) to determine if a defect is present in the surface (106); and
if detected, discarding the component (100).

11. The method of claim 10, wherein scanning the surface (106) of the top layer (104) of the component (100) to determine if a defect is present in the surface (106) comprises:
obtaining data indicative of the surface (106) of the top layer (104) of the component (100) by interrogating the surface (106) of the top layer (104) of the component (100) with a scanning device (116); and
comparing the data with a reference database to determine if an irregularity is present.

12. The method of claim 11, wherein obtaining data and comparing the data is performed by a controller (134) in communication with the scanning device (116).

13. The method of claim 10, wherein forming the surface (106) on the top layer (104) of the component (100) comprises:
depositing a layer of powder; and
directing energy from an energy source (114) to selectively fuse the layer of powder.

14. The method of claim 1, wherein the surface (106) is scanned with a scanning device (116) for optical metrology.

15. The method of claim 1, wherein the surface (106) is scanned with a scanning device (116) for structured light or with a scanning device (116) for flash infrared detection.
